# EUROPÄISCHE PATENTSCHRIFT

(11) **EP 1 674 348 B1**
(45) Veröffentlichungstag und Bekanntmachung des Hinweises auf die Patenterteilung: **25.03.2009**
(21) Anmeldenummer: 05023125.7
(22) Anmeldetag: 24.10.2005
(51) Int. Cl.: B60R 21/13, B60J 7/12

(54) **Kraftfahrzeug mit einem beweglichen Dach und einem ausfahrbaren Überrollschutzelement**
Vehicle with a movable roof and a deployable roll over protection device
Véhicule comportant un toit mobile et un arceau deployable

(30) Priorität: 22.12.2004 DE 102004062999
(43) Veröffentlichungstag der Anmeldung: 28.06.2006
(73) Patentinhaber: Dr. Ing. h.c. F. Porsche Aktiengesellschaft, 70435 Stuttgart (DE)
(72) Erfinder: Hermann, Felix, 71229 Leonberg (DE); Beierl, Dominik, 70825 Korntal-Münchingen (DE)

(56) Entgegenhaltungen:
- EP-A- 1 510 412
- DE-B3- 10 329 903
- DE-U1- 9 200 457
- US-B1- 6 572 145

## Beschreibung

Bei der Erfindung wird ausgegangen von einem Cabriolet mit einem beweglichen Dach und einem ausfahrbaren Überrollschutzelement, gemäß Oberbegriff des Anspruchs 1.

Ein gattungsbildendes Cabriolet ist aus der DE 103 29 903 B3 bekannt. Es weist oberhalb einer Gürtellinie des Aufbaus ein bewegliches Dach in Form eines Verdeckes auf, in dessen von einem flexiblen Verdeckbezug gebildeten Dachhaut ein Heckfenster eingesetzt ist. Ferner besitzt das Cabriolet ein Uberrollschutzelement, das als zumindest ein hinter einem Fahrzeugsitz angeordneter Überrollbügel ausgebildet ist. Der Überrollbügel ist ausfahrbar von einer versenkten bzw. eingefahrenen Ruhestellung in eine ausgefahrene die Gürtellinie des Cabriolets überragenden Schutzstellung in einer Aufnahmekassette gehalten. Bei in Schließstellung angeordnetem Dach ist die erste Schutzstellung so bemessen, dass die Dachhaut bzw. das Heckfenster nicht zerstört werden. Liegt das Dach in der Öffnungsstellung vor, wird das Überrollschutzelement in eine zweite Schutzstellung ausgefahren, die die erste Schutzstellung überragt.

Aus der nachveröffentlichten EP 1 510 412 A1 ist ein bewegbares Dach für ein Cabriolet bekannt, bei dem in einer den Fahrgastraum überspannenden Schließstellung ein ausgelöstes und ausfahrendes Überrollschutzelement die Heckscheibe durchbricht.

Aufgabe der Erfindung ist es, ein Cabriolet der eingangs genannten hinsichtlich des Überrollschutzes zu verbessern.

Gelöst wird diese Aufgabe mit einem Cabriolet, das die in Anspruch 1 genannten Merkmale aufweist. Weitere Ausgestaltungen der Erfindung sind in den Unteransprüchen enthalten.

Die mit der Erfindung hauptsächlich erzielten Vorteile sind darin zu sehen, dass unabhängig von der Stellung des Daches (Öffnungs - oder Schließstellung) für den/die Fahrzeuginsassen ein vergrößerter Schutzbereich bereitgestellt werden kann. Die Ausfahrhöhe des Überrollschutzelements wird also unabhängig von der Dachstellung maximal gewählt. Das bewegliche Dach ist in einem Ausführungsbeispiel nach Anspruch 7 als Verdeck mit einem flexiblen Verdeckstoff ausgeführt, welcher zusammen mit dem Heckfenster die Dachhaut bilden kann.

Nach einer Weiterbildung (Anspruch 2) der Erfindung durchbricht das Überrollschutzelement in seiner Schutzstellung die Dachhaut. Dabei kann vorgesehen sein, dass das Überrollschutzelement einen undurchsichtigen Abschnitt der Dachhaut durchstößt. Alternativ (Anspruch 3) kann das Überrollschutzelement einen durchsichtigen Abschnitt, nämlich das Heckfenster, durchstoßen oder - wie in Anspruch 5 angegeben - das Heckfenster aus der Dachhaut zumindest teilweise herauslösen bzw. heraustrennen. Dafür ist in bevorzugter Ausführungsform das Heckfenster mit einer Sollbruchstelle ausgestattet, die eine Zerstörung des Heckfensters sicher erlaubt, und/oder das Heckfenster ist über eine Sollbruchstelle in der Dachhaut gehalten, wie dies in Anspruch 7 angeführt ist.

Um die Zerstörung des Heckfensters bzw. das Durchstoßen der Dachhaut günstig zu beeinflussen, wird in einem bevorzugten Ausführungsbeispiel entsprechend Anspruch 6 das Überrollschutzelement mit einem Durchstoßelement, insbesondere Dorn, ausgerüstet.

Die Erfindung wird nachfolgend anhand von zwei Ausführungsbeispielen mit Bezug auf die Zeichnung näher erläutert. Es zeigen:
- Fig. 1 bis 3: in verschiedenen Ansichten in einem ersten Ausführungsbeispiel ein Dach eines Cabriolets mit einem Überrollschutzelement, und
- Fig. 4 bis 6: in verschiedenen Ansichten in einem zweiten Ausführungsbeispiel ein Dach eines Cabriolets mit einem Überrollschutzelement.

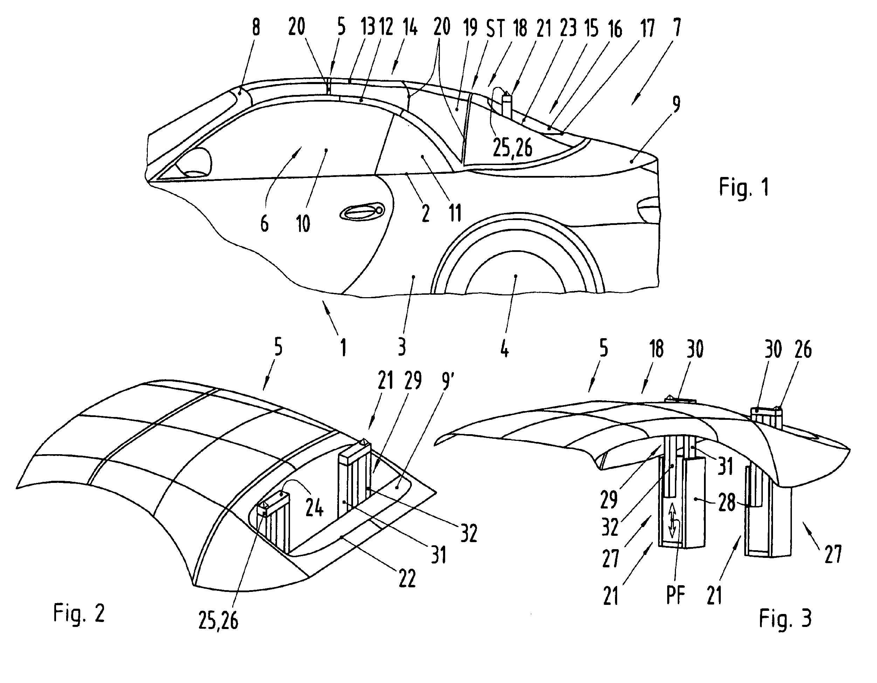

Fig. 1 zeigt in einer Seitenansicht teilweise ein Kraftfahrzeug 1, insbesondere Cabriolet, mit einem eine Gürtellinie 2 aufweisenden Aufbau 3, der von einem Fahrwerk mit Rädern getragen wird, von denen lediglich ein Rad 4 gezeigt ist. Oberhalb der Gürtellinie 2 ist in Schließstellung ST ein bewegliches bzw. verstellbares Dach 5 angeordnet, das bogenartig einen Fahrgastraum 6 von einem Heckbereich 7 bis zu einem oberen Windlauf 8 überspannt und das im Heckbereich 7 in einer Öffnungsstellung (nicht dargestellt) in einem unter einem bewegbaren Verdeckkastendeckel 9 angeordneten Verdeckkasten 9' (Fig. 2) ablegbar ist. Seitlich oberhalb der Gürtellinie 2 wird der Fahrgastraum 6 noch von bewegbaren Seitenscheiben 10 bzw. 11 begrenzt, die in ihrer angehobenen Stellung an einen seitlichen Dachrahmen 12 des Daches 5 heranreichen.

Das Dach 5 besitzt eine außen liegende Dachhaut 13, die einen ersten undurchsichtigen Abschnitt 14 und, insbesondere nahe des Heckbereichs 7, einen zweiten, durchsichtigen Abschnitt 15 umfasst. Der zweite Abschnitt 15 wird insbesondere von einem in die Dachhaut 13 eingesetzten Heckfenster 16 gebildet, das als starre Scheibe ausgeführt ist, die in einem Ausschnitt 17 in der Dachhaut 13 befestigt ist. Vorzugsweise ist das Dach 5 als Cabriolet - Verdeck 18 ausgeführt und weist als ersten Abschnitt 14 einen flexiblen Verdeckbezug 19 auf, der von einem hier nur teilweise zu sehenden Verdeckgestänge 20 getragen wird, dem auch der Dachrahmen 12 zugeordnet ist.

Im Fahrgastraum 6 ist hinter hier nicht gezeigten Fahrzeugsitzen und vor dem Verdeckkasten 9' zumindest ein Überrollschutzelement 21 angeordnet, das von einer nicht gezeigten eingefahrenen Ruhestellung in eine ausgefahrene Schutzstellung ZT verlagert werden kann, in der es die Gürtellinie 2 überragt. Die Ruhestellung kann unter bzw. nahe der Gürtellinie 2 liegen. In der Schutzstellung ZT hat das Überrollschutzelement 21 die Dachhaut 13 durchdrungen und überragt somit diese, wie dies in den verschiedenen Ansichten in den Fig. 1 bis 3 dargestellt ist. Insbesondere ist das Überrollschutzelement 21 in Ruhestellung unterhalb des durchsichtigen Abschnitts 15 angeordnet und durchdringt dessen Ebene 22 zum Erreichen der Schutzstellung ZT, in welcher Ebene 22 das Heckfenster 16 liegt. Um die Schutzstellung ZT einnehmen zu können, durchbricht das Überrollschutzelement 21 die Dachhaut 13, beispielsweise das Heckfenster 16, durch teilweise Zerstörung der Dachhaut 13, insbesondere des Heckfensters 16, das somit aus dem undurchsichtigen ersten Abschnitt 14 der Dachhaut 13 herausgelöst wird. Um das Durchbrechen des Heckfensters 16 erleichtern, kann dieses eine Sollbruchstelle 23 aufweisen, die durch eine Materialschwächung gebildet wird. Für das Zerstören des Heckfenster 16, allgemein zum Durchbrechen der Dachhaut, kann das Überrollschutzelement 21 an seiner der Dachhaut 13 zugewandten Oberseite 24 ein punktförmiges, lokal angebrachtes Durchstoßelement 25 aufweisen, das als Dorn 26 ausgeführt sein kann.

Wie aus den Fig. 2 und 3 ersichtlich, können zwei nebeneinander angeordnete Überrollschutzelemente 21 in das Kraftfahrzeug 1 eingesetzt sein. Jedes der Elemente 21 ist als Kassette 27 mit einem Befestigungs- und Führungsrahmen 28 und einem darin höhenverlagerbar (Pfeil PF) geführten Überrollbügel 29 mit einer Basis 30 (Oberseite 24) und zwei Führungsschenkeln 31 und 32 ausgebildet. Damit der Überrollbügel 29 in die Schutzstellung ZT verfahren werden kann, ist für eine Auslösesteuerung des in Ruhestellung gehaltenen Überrollbügels 29 ein nicht dargestellter Sensor mit einem entsprechenden Steuergerät vorgesehen. Sensor und Steuergerät erkennen einen beginnenden Überrollvorgang des Kraftfahrzeugs 1 und geben den vorzugsweise in Richtung Schutzstellung ZT vorgespannten Überrollbügel 29 über eine Auslösemechanik frei. Sensor, Steuergerät und Auslösemechanik sind jedoch bekannt, so dass auf deren weitere Beschreibung verzichtet wird.

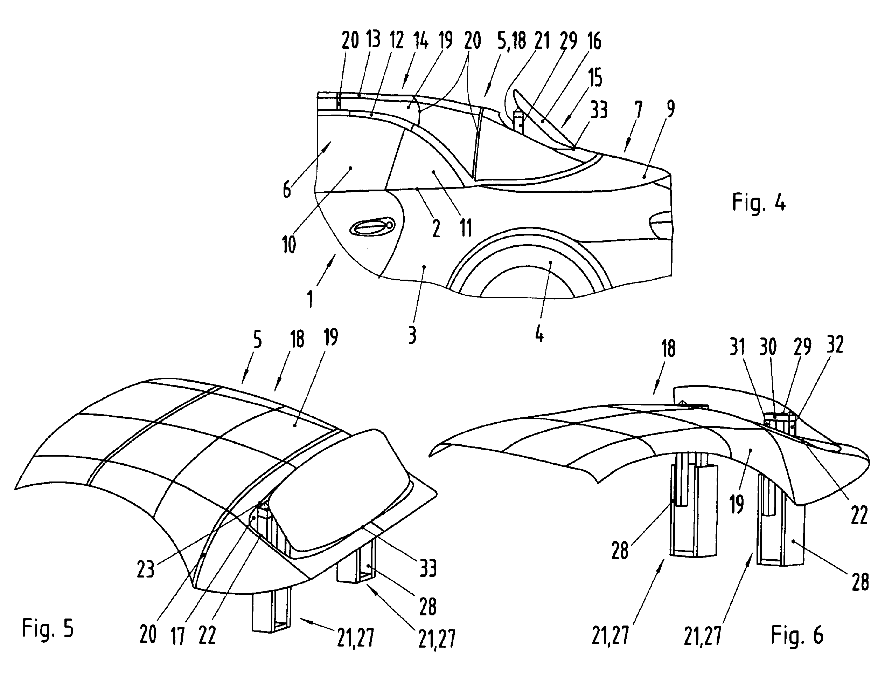

Anhand der Fig. 4 bis 6 wird ein zweites Ausführungsbeispiel eines Daches 5 beschrieben. Gleiche bzw. gleich wirkende Teile sind mit denselben Bezugszeichen wie in den Fig. 1 bis 3 versehen und umgekehrt. Die Sollbruchstelle 23 liegt zwischen Heckfenster 16 und dem ersten undurchsichtigen Abschnitt 14 der Dachhaut 13. Das Heckfenster 16 ist in der Dachhaut 13 gehalten, was in den Fig. 3 bis 6 nicht dargestellt ist; jedenfalls liegt das Heckfenster 16 in seiner Normalstellung in der Ebene 22. Die Sollbruchstelle 23 kann an dem Ausschnitt 17 umlaufend oder lediglich teilweise ausgeführt sein, so dass ein Aufklappen des Heckfensters 16 um ein Klappachse 33 möglich ist, damit das Überrollschutzelement 21 in seine Schutzstellung ZT gebracht werden kann, ohne das Heckfenster 16 zu Zerstören; denkbar wäre jedoch auch eine Kombination von Zerstörung und Heraustrennung des Heckfensters 16 aus der Dachhaut 13. Unabhängig davon, durchbricht das Überrollschutzelement 21 auch nach dem zweiten Ausführungsbeispiel die Ebene 22 des Heckfensters 16, so dass es die Dachhaut 13 überragen kann, wenn es in die Schutzstellung ZT bewegt wird.

Bei geöffnetem Dach 5 wird das Überrollschutzelement 21 in dieselbe Schutzstellung ZT verlagert. Unabhängig von der Stellung des Daches 5 wird unterhalb einer gedachten Tangente an Windlauf 8 und Oberseite 24 des Überrollschutzelements 21 ein erweiterter Schutzbereich für den/die Insassen des Kraftfahrzeugs 1 bereitgehalten.

## Patentansprüche

1. Cabriolet (Kraftfahrzeug 1) mit einem zwischen einer Öffnungs - und Schließstellung verstellbaren Dach (5), das oberhalb einer Gürtellinie (2) des Aufbaues (3) des Cabriolets angeordnet und durch ein Verdeck (18) mit einem die Dachhaut (13) darstellenden Verdeckbezug (19) gebildet ist, und mit einem aus einer Ruhestellung in eine Schutzstellung (ZT) ausfahrbaren Überrollschutzelement (21), **dadurch gekennzeichnet, dass** das Überrollschutzelement (21) in der Schutzstellung (ZT) und bei in Schließstellung (ST) vorliegendem Dach (5) die Dachhaut (13) überragt.

2. Cabriolet nach Anspruch 1, **dadurch gekennzeichnet, dass** das Überrollschutzelement (21) während seiner Bewegung von der Ruhestellung in die Schutzstellung (ZT) bei in Schließstellung (ST) vorliegenden Dach (5) die Dachhaut (13) durchbricht.

3. Cabriolet nach Anspruch 1 oder 2, **dadurch gekennzeichnet, dass** in der Dachhaut (5) des Daches (5) ein Heckfenster (16) angeordnet ist und dass das Überrollschutzelement (21) in seiner Schutzstellung (ZT) die Ebene (22) des Heckfensters (16) durchstößt.

4. Cabriolet nach Anspruch 3, **dadurch gekennzeichnet, dass** das Überrollschutzelement (21) bei seiner Bewegung von der Ruhestellung in die Schutzstellung (ZT) das Heckfenster (16) zumindest teilweise zerstört.

5. Cabriolet nach Anspruch 3, **dadurch gekennzeichnet, dass** das Überrollschutzelement (21) bei seiner Bewegung von der Ruhestellung in die Schutzstellung (ZT) das Heckfenster (16) zumindest teilweise aus der Dachhaut (13) heraustrennt.

6. Cabriolet nach einem der vorhergehenden Ansprüche, **dadurch gekennzeichnet, dass** das Überrollschutzelement (21) ein Durchstoßelement (25) an seiner der Dachhaut (13) zugewandten Oberseite (24) aufweist.

7. Cabriolet nach einem der vorhergehenden Ansprüche, **dadurch gekennzeichnet, dass** das Heckfenster (16) eine Sollbruchstelle (23) aufweist oder über eine Sollbruchstelle (23) in der Dachhaut (13) gehalten ist.

## Claims

1. Cabriolet (motor vehicle 1) with a roof (5) which can be displaced between an open and a closed position, is arranged above a belt line (2) of the cabriolet body (3) and is formed by a cabriolet top (18) with a cabriolet-top cloth (19) constituting the roof skin (13), and with a rollover protection element (21) which can be extended from an inoperative position into a protective position (ZT), **characterized in that** the rollover protection element (21) projects over the roof skin (13) in the protective position (ZT) and when the roof (5) is in the closed position (ST).

2. Cabriolet according to Claim 1, **characterized in that**, during its movement from the inoperative position into the protective position (ZT), the rollover protection element (21) breaks through the roof skin (13) when the roof (5) is in the closed position (ST).

3. Cabriolet according to Claim 1 or 2, **characterized in that** a rear window (16) is arranged in the roof skin (13) of the roof (5), and **in that**, in its protective position (ZT), the rollover protection element (21) pushes through the plane (22) of the rear window (16).

4. Cabriolet according to Claim 3, **characterized in that**, during its movement from the inoperative position into the protective position (ZT), the rollover protection element (21) at least partially destroys the rear window (16).

5. Cabriolet according to Claim 3, **characterized in that**, during its movement from the inoperative position into the protective position (ZT), the rollover protection element (21) at least partially detaches the rear window (16) from the roof skin (13).

6. Cabriolet according to one of the preceding claims, **characterized in that** the rollover protection element (21) has a push-through element (25) on its upper side (24) facing the roof skin (13).

7. Cabriolet according to one of the preceding claims, **characterized in that** the rear window (16) has a predetermined breaking point (23) or is held in the roof skin (13) via a predetermined breaking point (23).

## Revendications

1. Cabriolet (véhicule automobile 1) avec un toit (5) mobile entre une position d'ouverture et une position de fermeture, qui est disposé au-dessus d'une ligne de ceinture (2) de la superstructure (3) du cabriolet et qui est formé par une capote (18) avec une couverture de capote (19) représentant la peau du toit (13), et avec un arceau de sécurité (21) déployable d'une position de repos à une position de protection (ZT), **caractérisé en ce que** l'arceau de sécurité (21) dépasse de la peau du toit (13) dans la position de protection (ZT) et lorsque le toit (5) se trouve en position de fermeture (ST).

2. Cabriolet selon la revendication 1, **caractérisé en ce que** l'arceau de sécurité (21) perce la peau de toit (13) pendant son mouvement de la position de repos à la position de protection (ZT) lorsque le toit (5) se trouve dans la position de fermeture (ST).

3. Cabriolet selon la revendication 1 ou 2, **caractérisé en ce qu'**une lunette arrière (16) est disposée dans la peau (13) du toit (5) et **en ce que** l'arceau de sécurité (21) perfore le plan (22) de la lunette arrière (16) dans sa position de protection (ZT).

4. Cabriolet selon la revendication 3, **caractérisé en ce que** l'arceau de sécurité (21) détruit au moins en partie la lunette arrière (16) lors de son mouvement de la position de repos à la position de protection (ZT).

5. Cabriolet selon la revendication 3, **caractérisé en ce que** l'arceau de sécurité (21) détache au moins en partie la lunette arrière (16) de la peau du toit (13) lors de son mouvement de la position de repos à la position de protection (ZT).

6. Cabriolet selon l'une quelconque des revendications précédentes, **caractérisé en ce que** l'arceau de sécurité (21) présente un élément perforant (25) sur son côté supérieur (24) tourné vers la peau du toit (13).

7. Cabriolet selon l'une quelconque des revendications précédentes, **caractérisé en ce que** la lunette arrière (16) présente une zone de rupture préférentielle (23) ou est maintenue dans la peau de toit (13) par une zone de rupture préférentielle (23).
